# EUROPÄISCHE PATENTANMELDUNG

(11) **EP 2 226 033 A1**
(43) Veröffentlichungstag der Anmeldung: **08.09.2010**
(21) Anmeldenummer: 08767004.8
(22) Anmeldetag: 25.01.2008
(51) Int. Cl.: A61C 8/00, B25B 23/14

(54) **SCHRAUBVORRICHTUNG**

(30) Priorität: 29.12.2007 RU 2007148851
(71) Anmelder: Obschestvo S Ogranichennoi Otvetstvennostju 'Conmet', Moscow 125413 (RU)
(72) Erfinder: KRASHENINNIKOV, Leonid Alekseevich, Moscow 109377 (RU); REMOV, Aleksei Jurievich, Moscow 127411 (RU); SILAEV, Andrei Borisovich, Moscow 125-499 (RU); TETJUKHIN, Dmitry Vladislavovich, Moscow 125413 (RU); SHMELEV, Mikhail Vladimir, Moscow 123430 (RU)
(74) Vertreter: Meissner, Bolte & Partner
(86) Internationale Anmeldenummer: PCT/RU2008/000038
(87) Internationale Veröffentlichungsnummer: WO 2009/088320

(57) **Zusammenfassung**

Es wird eine Vorrichtung 1 zum Festschrauben angeboten, die das Gehäuse 2 und den Kopfteil 3 mit der Querbohrung 4 einschließt, wobei innerhalb des Kopfteiles 3 von der Querbohrung 4 bis zur Stirnfläche 5 verlaufende Längsbohrung 6 ausgeführt ist, in dem der Stößel 7 mit dem Greifstift 8 an der Stirnfläche und die Feder 9 angeordnet ist. Die Besonderheit der Erfindung besteht darin, dass in der Wand 10 der Längsbohrung 6 des Kopfteils 3 von der Stirnfläche 5 her zwei entgegen gerichteten Längsrillen 11 mit der Querrille 12 an den Enden 13 der Längsrillen 11 ausgebildet sind. Der Endteil 14 des Gehäuses 2 ist mit zwei entgegen gerichteten Nocken 15 ausgeführt und im zusammengesetzten Zustand in der Längsbohrung 6 des Kopfteils 3 angeordnet ist, und die Enden seiner Nocken 15 - in der Querrille 12 mittels der Längsrillen 11, wobei die Feder 9 zwischen dem Stößel 7 und dem Endteil 14 des Gehäuses 2 installiert ist.

Die angemeldete Erfindung ermöglicht eine wesentliche Arbeitsaufwandverringerung bei der Demontage und der Montage.

## Beschreibung

### Gebiet der Technik

Die Erfindung bezieht sich auf das Gebiet der Medizin, hier auf die Zahnmedizin, nämlich auf die Instrumente für Insertion von Implantaten und Suprakonstruktionen in der Dentalimplantologie, insbesondere auf die Vorrichtungen zum Festschrauben.

Anmerkung: Suprakonstruktion ist ein gerader (senkrechter) oder winkeliger (unter einem Winkel eingesetzter) Kopf, auf den eine Zahnkonstruktion, zum Beispiel eine Krone, aufgesetzt wird.

### Zugrunde liegender Stand der Technik

In der zahnmedizinischen Praxis sind die Vorrichtungen zum Festschrauben, manchmal Wendeschlüssel, Drehmomentschlüssel, Ratschenschlüssel, Ratsche u.s.w. genannt, von großer Bedeutung. Sie gehören zum Operationsbesteck für Insertion von Implantaten; es gibt zwei Typen von ihnen: Vorrichtungen zum Festschrauben mit kontrollierbarem Drehmoment, das beim Festschrauben angelegt wird (gewöhnlich Drehmomentschlüssel genannt) und Vorrichtungen zum Festschrauben ohne Überwachung des Drehmomentwertes, das beim Festschrauben angelegt wird (Wendeschlüssel, Ratschenschlüssel). Die ersten ermöglichen Dosierung der an den Rotationsgegenstand angegriffenen Kraft, die zweiten ermöglichen das nicht. In einem Operationsbesteck wird der Vorrichtung zum Festschrauben (Wendeschlüssel, Drehmomentschlüssel, Ratschenschlüssel) ein Satz von verschiedenen Ansatzstücken für Insertion von unterschiedlichen Elementen des Zahnsystems (Implantate, Suprakonstruktionen, Schrauben u.s.w.) beigelegt.

Gleich nach der Operation sollen diese Vorrichtungen demontiert, sorgfältig gereinigt, desinfiziert, geprüft und wieder montiert werden. Das ist dadurch zu erklären, dass während der Operation insbesondere das Blut ins Innere eindringen kann, das ohne Demontage der Vorrichtung nicht entfernt werden kann.

Es ist eine undemontierbare Vorrichtung zum Festschrauben (Drehmomentschlüssel) mit Überwachung des maximalen beim Festschrauben angelegten Drehmoments von 30 H·cm bekannt ("Alpha Bio System". "Produktionskatalog 2006", Seite 5, Nr. 4571-DT 30. Schlüssel mit Kraftüberwachung).

Bei der Überschreitung des maximalen Wertes schwenkt ("knickt") ihr Kopfteil mit der Durchgangsbohrung gegen das Gehäuse. Die Vorrichtung ist für 20 H·cm und für 30 H·cm entwickelt. Sie ist undemontierbar und deshalb nicht so sehr betriebsfreundlich, weil sie nach der Operation nicht sorgfältig gereinigt und desinfiziert werden kann. Außerdem hat sie keine Regulierung der Drehmomentkraft.

Es ist eine undemontierbare Vorrichtung zum Festschrauben (Drehmomentschlüssel) mit Überwachung des maximalen beim Festschrauben angelegten Drehmoments bekannt. ("Alpha Bio System". "Produktionskatalog 2006", Seite 5, Nr. 4572-URATT. Universales Kraftmessgerät). Ihr Vorteil ist die Regulierungsmöglichkeit des maximalen Drehmomentwertes, wobei der Kopfteil mit der Durchgangsbohrung um das Gehäuse im Bereich von 0 bis zu 45 H·cm schwenkt ("knickt"). Aber der Kopfteil dieses Schlüssels kann auch nicht demontiert werden. Infolgedessen ist die sorgfältige Reinigung, zum Beispiel Blutentfernung, sowie die Desinfektion unmöglich.

Es ist die aus einem Gehäuse und einem Kopfteil mit der Querbohrung bestehende Vorrichtung zum Festschrauben bekannt, wobei in ihrem Kopfteil eine von der Querbohrung bis zur Stirnfläche verlaufende Längsbohrung ausgebildet ist, in der ein Stößel mit dem Greifstift an der Stirnfläche und eine Feder angebracht sind. ("Anleitung für die Zahnimplantierung. Operationsphase", TIOLOX IMPLANTS GmbH, herausgegeben von ZAO "Dentaurum", Moskau, 2006, S. 8-9).

Diese technische Lösung wurde als Prototyp der angemeldeten Erfindung akzeptiert, da sie die nächstliegende Lösung in der Gesamtheit der allgemeinen wesentlichen Merkmalen und im erreichbaren technischen Ergebnis ist.

Im Vergleich zu den oben beschriebenen technischen Lösungen ermöglicht diese Vorrichtung nicht nur das maximale Drehmoment zu regulieren, sondern auch sie zur Entfernung der Blutklumpen zu demontieren und zu desinfizieren. Aber ihre Demontage und Montage sind sehr kompliziert. Man braucht einen Sonderschlüssel, um die Mutter zu lösen und innere Teile herauszunehmen. Montage und Demontage werden dadurch erschwert, dass die Teile klein sind und dabei leicht verloren werden können.

Deswegen muss man diese Vorrichtung ans Herstellungswerk zur Demontage und Desinfektionsbearbeitung bringen, was unbequem ist.

So ist der bisherige Stand der Technik der anmeldenden Erfindung.

### Offenbarung der Erfindung

Die technische Aufgabe der angemeldeten Erfindung besteht in der Entwicklung einer solchen Vorrichtung zum Festschrauben, die Demontage und Montage zur Reinigung und Desinfizierung ohne Anwendung des Sonderwerkzeuges durch den Zahnarzt selbst ermöglicht, mit der gleichzeitigen Erhaltung aller anderen Vorteilen, insbesondere der Möglichkeit, den maximalen Wert des beim Festschrauben angelegten Drehmoments zu regulieren.

Die gestellte technische Aufgabe wird dadurch gelöst, dass die Vorrichtung zum Festschrauben, die aus einem Gehäuse und einem Kopfteil mit einer Querbohrung besteht, wobei innerhalb des Kopfteils eine von der Querbohrung bis zu der Stirnfläche verlaufende Längsbohrung ausgeführt ist, in der ein Stößel mit dem Greifstift an seiner Stirnfläche und eine Feder angebracht sind, wird gemäß der Erfindung **dadurch gekennzeichnet, dass** an der Längsbohrungswand des Kopfes von der Stirnfläche her zwei entgegen gerichtete Längsrillen mit einer Querrille am Ende ausgebildet sind, der Endteil des Gehäuses mit zwei entgegen gerichteten Nocken gefertigt ist und im zusammengesetzten Zustand in die Querbohrung des Kopfteiles eingesetzt ist, und die Enden seiner Rillen - in die Querrillen mittels der Längsrillen, wobei die Feder zwischen dem Stößel und dem Endteil des Gehäuses angebracht ist.

Das technische Ergebnis der Erfindung besteht in der Arbeitsaufwandsverringerung bei der Demontage und Montage mit gleichzeitiger Erhaltung aller anderen Vorteile insbesondere der Möglichkeit, den maximalen Wert des beim Festschrauben angelegten Drehmoments zu regulieren. Er ist bemerkenswert, dass Demontage und Montage der Vorrichtung unmittelbar von den medizinischen Kräften der Behandlungseinrichtung durchgeführt werden können.

Außerdem erachten wir als nötig, folgende Entwicklungen und/oder Detaillierungen der Gesamtheit von allgemeinen wesentlichen Merkmalen der Erfindung auszusondern, die sich auf die Einzelfälle der Ausführung oder der Anwendung beziehen,

Sie sind dadurch hervorgerufen, dass grundsätzlich gesagt eine Vielfalt von Konstruktionen der einzelnen Bauteilen und Baugruppen der angemeldeten Erfindung entwickelt werden kann, insbesondere Kopfteil, Gehäuse, Stößel, Verbindungsbauteile zwischen dem Kopfteil und dem Gehäuse u.s.w.; dabei bleibt in allen diesen Fällen das Wesen der Erfindung bestehen, was die Mühelasigkeit der Demontage und Montage gewährleistet. Der Anmelder hat selbst mehrere Modifikationen entwickelt. Nachstehend werden einige besonders optimale Varianten vorgestellt.

Der Meinung des Anmelders nach, ist es besonders wünschenswert, dass der Endteil des Gehäuses eine Kugelform hat, da solch eine Form die Vorrichtung schnell und ohne Lagebegrenzung betreiben lässt.

Es ist auch zweckmäßig, die Querrillen des Kopfteiles mit zusätzlichen entgegen gerichteten Rillen zu fertigen, die nach Stirnseite gerichtet sind, in welcher die Längsbohrung einmündet. Das ermöglicht, die Lage des Kopfteiles dem Gehäuse gegenüber festzuhalten, was die Handhabung erleichtert, die Funktionsfähigkeit und Nutzungsdauer erhöht.

Der Aufbau des Stößels und seine Lage in der Längsbohrung des Kopfteils der Vorrichtung können verschieden sein. Aber nach der Meinung des Anmelders ist die Konstruktion mit der zylindrischen Form der Längsbohrung und des Stößels besonders bevorzugt, dabei hat die Wand des Längsbohrung zwischen der Querbohrung und der Querrille einen Nocken und an der Stirnfläche des Stößels gibt es einen zylinderförmigen Nocken mit einer flachen seitlichen längslaufenden Schnittfläche und an der Stirnfläche des zylinderförmigen Nockens ist ein Greifstift ausgebildet, und außerdem im Kopfteil ist eine zusätzliche Querbohrung gemacht, welche die Längsbohrung zwischen der Querbohrung und der Querrille, in der ein Querstift angebracht ist, teilweise durchquert, wobei im zusammengesetzten Zustand die flache seitliche längsläufige Schnittfläche des zylinderförmigen Nockens die Querstiftoberfläche berührt.

Die Ausführung der Stirnfläche des Kopfteiles kann verschieden sein. Aber wünschenswert ist solche Ausführung, bei der die Stirnfläche, in der die Längsbohrung einmündet, die Ecknocken hat, wobei zwei diagonal entgegengesetzt eingeordneten Nocken niedriger sein müssen als die anderen zwei Ecknocken, und die Stirnflächen zwischen den mit den entgegen gerichteten Rillen versehenen Nocken eine Neigung von außen nach innen haben.

Bei dieser Konstruktion kann das Gehäuse mehrere Modifikationen haben. Aber der Anmelder findet für besonders zweckmäßig solch eine Konstruktion, in der das Gehäuse einen Kopfteil mit zwei entgegen gerichteten Nocken und einen Hauptteil hat, der den mit dem Endteil des Gehäuses verbundenen Stift mit einem Schraubengewindeabschnitt am entgegen gesetzten Ende, das den Stift umfassende Rohrelement, ein Ende dessen verjüngt und an die geneigte Stirnflächen abgestützt ist, wobei im Ringspalt zwischen dem Rohrelement und dem Stift eine Feder angebracht ist, die sich mit einem Ende gegenüber den in der Innenwand des Rohrelementshohlraums vom verjüngten Ende her ausgeführten Nocken abstützt, und mit dem zweiten Ende durch die Stirnfläche des in den Ringspalt eingeführten Zylinders mit dem Längshohlraum angedrückt ist, der die Schraubengewinde an seiner Innenoberfläche hat, die an die Stiftschraubengewinde aufgeschraubt ist.

Diese Konstruktion ermöglicht nicht nur die Demontierbarkeit, sondern auch die Möglichkeit der Regulierung des maximalen Drehmomentwertes, der beim Festschrauben angelegt wird.

Dabei ist es zweckmäßig, an der Stirnfläche des verjüngten Endes des Rohrelements zwei gegenüberliegende Aussparungen auszuführen, im zusammengesetzten Zustand sollen sie gegenüber den Rippen liegen, die die geneigten Stirnflächen des Kopfteiles von außen her begrenzen.

Es ist auch wünschenswert, an der Stirnfläche des der Stirnfläche mit dem Greifstift gegenüberliegenden Stößels eine Nut auszuführen. Das ermöglicht es, die Feder im Kopfteil längslaufend auszurichten.

Zur Erhöhung der Handlichkeit bei der Montage der Vorrichtung und zur Ausschließung der Notwendigkeit an speziellen Schraubendreher ist es zweckmäßig, den Stift mit einem sechskantigen Vorsatz an der Stirnfläche des zu versehen und den längslaufende Hohlraum des zylinderförmigen Körpers der Greifvorrichtung eine zusätzliche Nut in der Sechskantform auszuführen.

Zur Erhöhung der Fertigungsfreundlielikeit der angemeldeten Vorrichtung ist es wünschenswert, dass die zwei als Kugel ausgeführten Nocken am Endteil des Gehäuses die Enden eines Stiftes bilden, der innerhalb der diametralen Durchgangsbohrung der Kugel befestigt ist.

### Kurzbeschreibung der Zeichnungen

Die Erfindung wird mit den Zeichnungen näher erläutert:
Fig. 1 zeigt die Vorrichtung zum Festschrauben im auseinander genommenen Zustand, Gesamtansicht, Isometrie;
Fig. 2 zeigt den abgesonderten Kopfteil der Vorrichtung, Isometrie;
Fig. 3 - dasselbe, Seitenansicht;
Fig. 4 - Querschnitt A-A Fig. 3;
Fig. 5 - dasselbe, Querschnitt B-B Fig. 3;
Fig. 6 - dasselbe, Ansicht gemäß dem Pfeil B in Fig. 5;

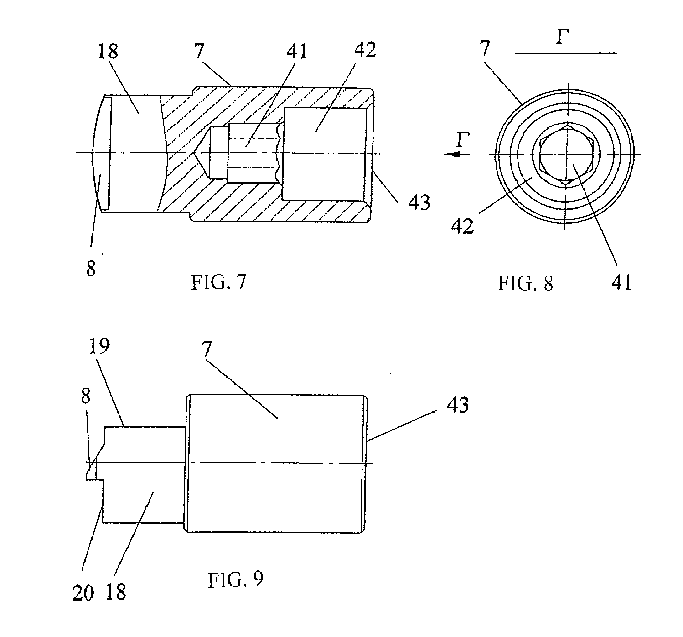

Fig. 7 zeigt den Stößel, Draufsicht;
Fig. 8 - dasselbe, Ansicht gemäß dem Pfeil r in Fig. 7;
Fig. 9 - dasselbe, Seitenansicht;
In Fig. 10 ist der Stift dargestellt, Seitenansicht;

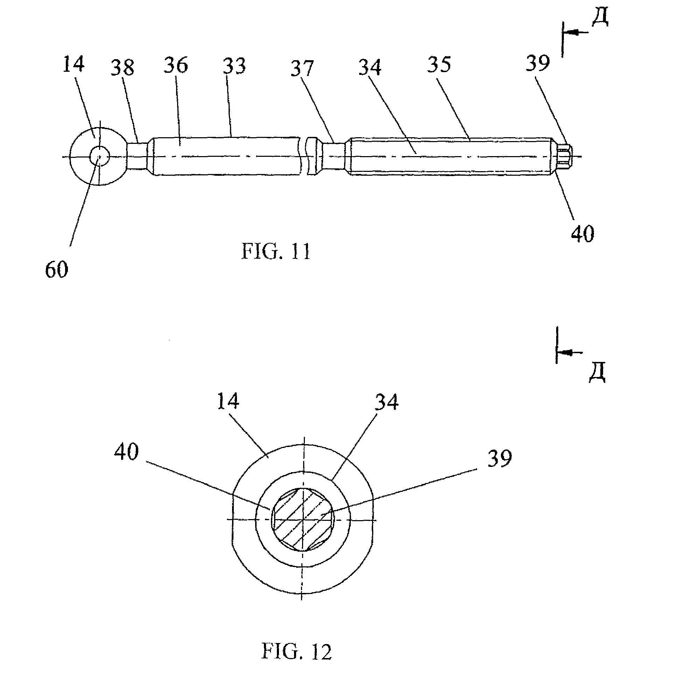

In Fig. 11 ist der Stift dargestellt, Seitenansicht (dargestellt ohne zwei entgegen gerichteten Nocken;)
Fig. 12 - dasselbe, Querschnitt A-A Fig. 11;
In Fig. 13 ist ein Rohrelement dargestellt, Seitenansicht;
Fig. 14 - dasselbe, Ansicht von dem nicht verjüngten Ende her;
Fig. 15 - dasselbe, Ansicht von dem verjüngten Ende her;
Fig. 16 - dasselbe, Draufsicht;

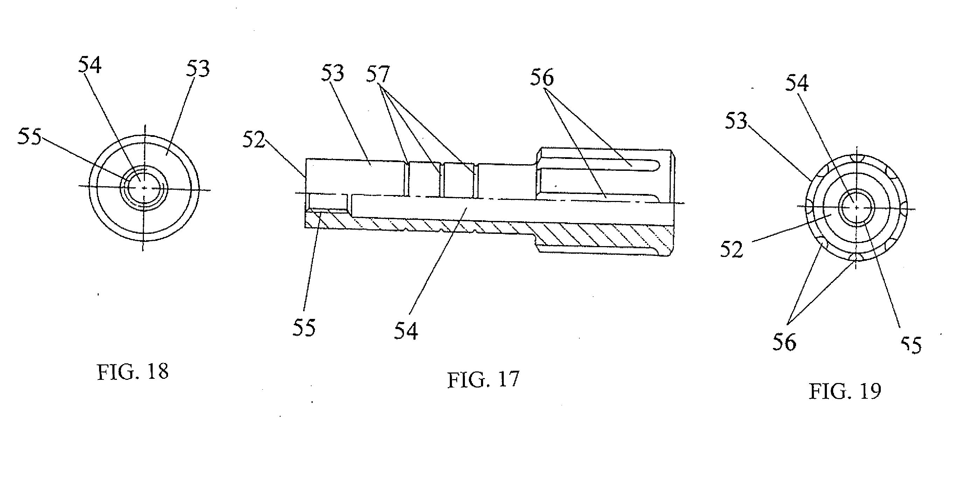

In Fig. 17 ist Zylinder mit einem längslaufenden Hohlraum dargestellt;
Fig. 18 - dasselbe, Ansicht von der Stirnseite, wo der Hohlraum mündet;
Fig. 19 - dasselbe, Ansicht von der Blindstirnseite;
In Fig. 20 ist die angemeldete komplette Vorrichtung dargestellt, Längsschnitt;
Fig. 21 - dasselbe, Querschnitt.

### Die bevorzugt Variante der Erfindung

Die Vorrichtung 1 zum Festschrauben schließt das Gehäuse 2 und den Kopfteil 3 mit der Querbohrung 4 mitein. Innerhalb des Kopfteiles 3 ist von der Querbohrung 4 bis zur Stirnfläche 5 verlaufende Längsbohrung 6 ausgeführt, in dem der Stößel 7 mit dem Greifstift 8 an der Stirnflächen und die Feder 9 angeordnet ist. In der Wand 10 der Längsbohrung 6 des Kopfteils 3 sind von der Stirnfläche 5 her zwei entgegen gerichteten Längsrillen 11 mit der Querrille 12 an den Enden 13 der Längsrillen 11 ausgebildet. Der Endteil 14 des Gehäuses 2 ist mit zwei entgegen gerichteten Nocken 15 ausgeführt und im zusammengesetzten Zustand in der Längsbohrung 6 des Kopfteils 3 angeordnet ist, und die Enden seiner Nocken 15 - in der Querrille 12 mittels der Längsrillen 11, wobei die Feder 9 zwischen dem Stößel 7 und dem Endteil 14 des Gehäuses 2 installiert ist.

Bei der vorliegenden Variante der Ausführung der angemeldeten Vorrichtung hat der Endteil 14 des Gehäuses 2 eine Kugelforrn.

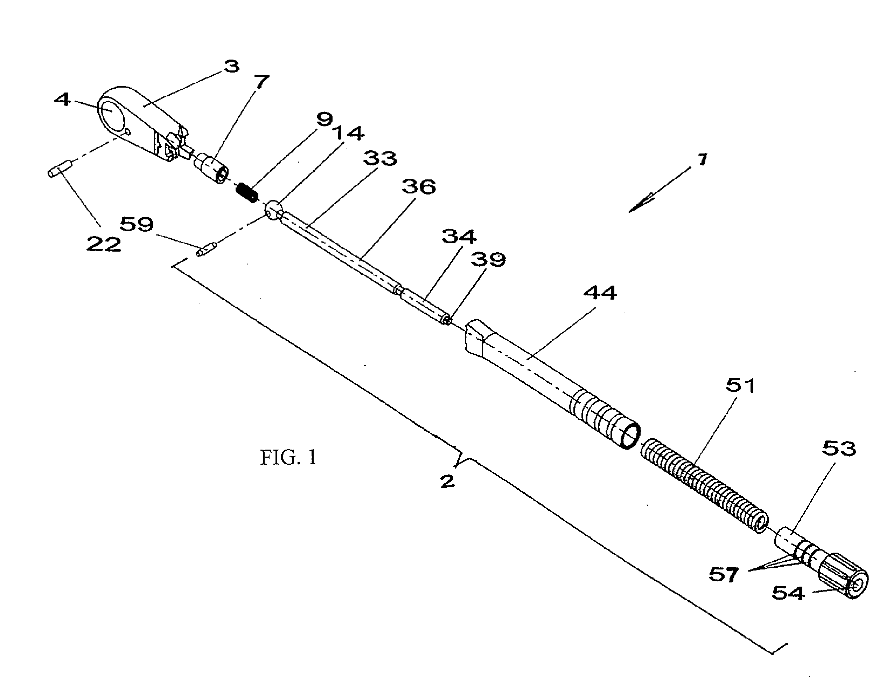

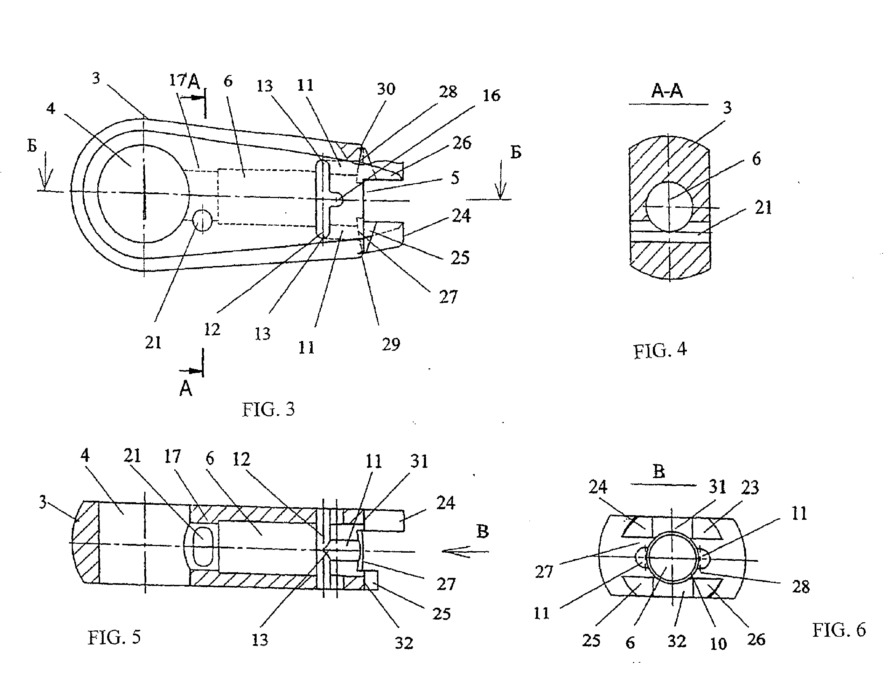

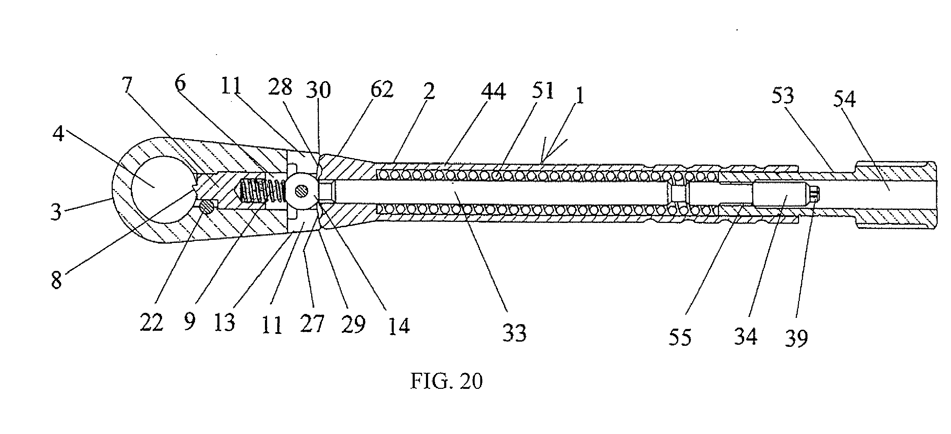

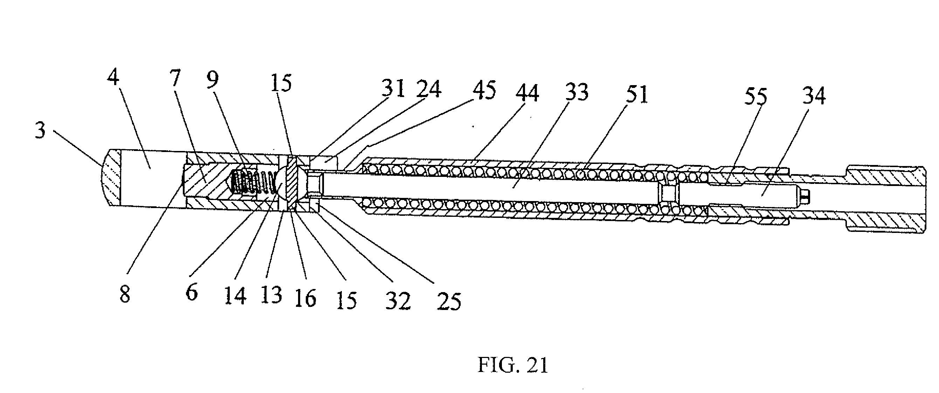

Betrachten wir Ausführung einzelner Teilen der Vorrichtung etwas näher. Der Kopfteil 3 stellt einen Volumenkörper vor, der verschiedene Formen haben kann, zum Beispiel, eine Tropfenform (Fig.1-6, 20,21), zylindrische Form u.s.w., auf dem zwei gegenüber liegende Seiten abgeflacht sind (Abstiche auf den parallelen Flächen). Die Größe des Kopfteils 3 wird mit den Abmessungen des Zubehörstücks abgestimmt (zum Beispiel, eines speziellen Ansatzstücks), auf das der Kopfteil mit seinem Querbohrung aufgesetzt wird, beziehungsweise mit den Abmessungen desjenigen Teiles des Zubehörstücks, den man drehen und festschrauben muss oder mit deren Hilfe verschiedene Suprakonstruktionen aufzusetzen oder Implantate zu inserieren sind.

Wie schon oben angemerkt, weist der Kopfteil 3 die Querbohrung 4 auf. Innerhalb des Kopfteils 3 ist von der Querbohrung 4 bis zur Stirnfläche 5 verlaufende Längsbohrung 6 ausgebildet, in der der Stößel 7 mit dem Greifstift 8 an der Stirnfläche und die Feder 9 angeordnet ist. In der Wand 10 der Längsbohrung 6 des Kopfteils 3 von der Stirnfläche 5 her sind zwei entgegen gerichteten Längsrillen 11 mit der Querrille 12 an den Enden 13 der Längsrillen 11 ausgebildet. Das Endteil 14 des Gehäuses 2 weist zwei entgegen gerichteten Nocken 15 auf und im zusammen gesetzten Zustand ist es in der Längsbohrung 6 des Kopfteils 3 eingesetzt, und die Enden seiner Nocken 15 - in der Querrille 12 mittels der Längsrillen 11, wobei die Feder 9 zwischen dem Stößel 7 und dem Endteil 14 des Gehäuses 2 angeordnet ist.

Die Querrille 12 des Kopfteils 3 wird durch die Bildung eines Durchschnitts dem Kopfteil 3 querüber auf solche Weise angefertigt, damit die Durchschnittsenden sich mit den Enden 13 der Längsrillen 7 zusamrnenfügen, weil dieses Anfertigungsverfahren besonders technischgerecht ist. Als Ergebnis bildet sich die Querrille 12 heraus, die aus vier aufeinander folgenden Abschnitten bestehen, von denen zwei gegenüber liegenden Abschnitten die Rillen in der Wand 10 der Längsbohrung 6 des Kopfteils 3 vorstellen, und die anderen zwei gegenüber liegende Abschnitte Durchlaufschlitze in der Wand 10 der Längsbohrung 6 vorstellen. Außerdem ist die Querrille 12 mit zusätzlichen gegenüberliegenden Rillen 16 ausgeführt ist, die nach die Stirnfläche 5 gerichtet sind, an die die Querrille 6 einmündet.

Die Längsbohrung 6 und der darin angeordnete Stößel 7 weisen zylindrische Form auf, dabei hat die Wand der Längsbohrung 6 zwischen der Querbohrung 4 und der Querrille 12 einen Nocken 17 in der Ringform.

An der Stirnfläche des Stößels 7 ist der zylinderförmige Nocken 17 mit dem flachen längslaufenden Seitenabstich 19 ausgebildet, und der Greifstift 8 ist an der Stirnfläche 20 des zylinderförmigen Nockens ausgeführt.

Außerdem ist am Kopfteil 3 eine zusätzliche Querbohrung 21 ausgebildet, die teilweise die Längsbohrung zwischen der Querbohrung und der den Stift 22 enthaltenen Querrille durchquert, wobei im zusammengesetzten Zustand der flache seitliche Längsschnitt 19 des zylinderförmigen Nocken 18 die Oberfläche des Stiftes 22 berührt (Fig, 20).

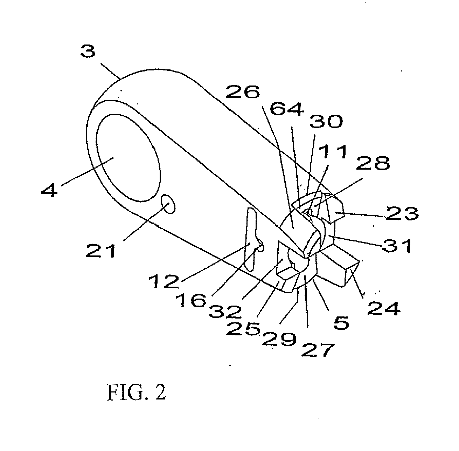

Die Stirnfläche 5, in der die Längsbohrung 6 mündet, hat die Ecknocken 23, 24, 25, 26, wobei zwei diagonal entgegen liegenden Nocken, und zwar 23 und 25, die kleinere Höhe haben, als die anderen zwei, und zwar 24 und 26. Es ist wichtig anzumerken, dass die Stirnflächen 27 und 28 zwischen den Nocken, in denen die entgegen liegenden Längsrillen 11 münden, nicht flach sind, sondern eine Neigung (Abstich) von Außenrippen 29 und 30 des Kopfteils 3 nach innen haben (Fig. 2, 3, 20). Die anderen Stirnflächen 31 und 32 zwischen den Nocken 23-26 sind flach ausgebildet, durch die Längsachse des Kopfsteils 3 querlaufend. Betrachten wir Ausführung des Gehäuses 2 etwas näher. Wie schon oben angemerkt, ist es zusammengebaut und mehrteilig. Es kann viele verschiedene Konstruktionen aufweisen. Aber in jedem Fall ragt aus dem Gehäuse das Endteil 14 mit zwei gegenüber gerichteten Nocken 15 heraus. Dieses Endteil 14 ist mit dem Hauptteil des Gehäuses verbunden. Die Konstruktion des Hauptteils kann auch verschieden sein. Der Anmelder bevorzugt folgende Konstruktion.

Der Hauptteil des Gehäuses weist den mit dem Endteil 14 des Gehäuses verbundenen Stift 33 auf, der an seinem Gegenende den Abschnitt 34 mit der Schraubengewinde 35 hat. Außerdem hat der Stift einen glatten zylindrischen Abschnitt 36. Zwischen dem Abschnitt 34 mit der Schraubengewinde 35 und dem glatten zylindrischen Abschnitt 36 gibt es eine verfahrensbedingte Aussparung 37 für den Ausgang der Gewinde bei der Fertigung, und zwischen dem glatten zylindrischen Abschnitt 36 und dem Endteil 12 des Gehäuses 2 gibt es eine verfahrensbedingte Einschnürung 38. Zusätzlich hat der Stift 33 einen sechskantigen Vorsprung 39 an der Stirnfläche 40. Dieser sechskantige Vorsprung stimmt seiner Größe nach der zusätzlichen sechsflächigen Rille 41 überein, die innerhalb der Aussparung 42 des Stößels 7 ausgebildet ist. Die Aussparung 42 ist an der Stirnfläche 43 des Stößels 7 ausgebildet, die der Stirnfläche mit dem Greifstift 8 gegenüberliegt (eingehende Erklärung ist nachstehend bei der Beschreibung der Montage und Demontage der Vorrichtung angerührt).

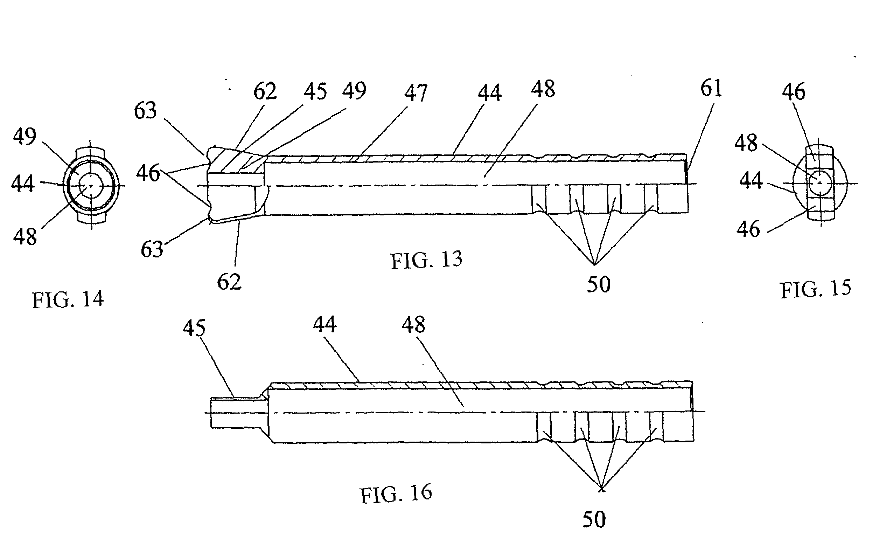

Außer des Stiftes 33 hat das Gehäuse 2 ein den Stift 33 umgreifendes Rohrelement 44 (Fig. 13-Fig.16). Das Rohrelement 44 dient als ein Haltegriff. Sein Ende 45 ist verjüngt. An der Stirnfläche des verjüngten Endes 45 des Rohrelements 44 sind zwei gegenüberliegenden Aushöhlungen 46 zur Fixierung bei dem Knick des Gehäuses gegenüber dem Kopfteil ausgebildet (sieh nachstehend die Beschreibung des Betriebs der Vorrichtung). An der Wand 47 des Hohlraums 48 des Rohrelements vom verjüngten Ende 45 her ist ein Vorsprung 49 ausgebildet. Außerdem sind an der Oberfläche des Rohrelements die Querrillen 50 zur Verminderung des Abrutschens der Finger ausgebildet. Im zusammengesetzten Zustand stützt sich das den Stift 33 umgreifendes Rohrelement 44 mit seinem verjüngten Ende 45 an die geneigte Stirnflächen 27 und 28 zwischen den Vorsprüngen des Kopfteils 3 an.

Im Ringspalt zwischen dem Stift 33 und dem Rohrelement 44 ist die Feder 51 angeordnet, die auch ein Bestandteil des Gehäuses 2 ist. Mit einem Ende ist sie an den Vorsprung 49 gelagert, der an der Wand 47 des Hohlraums 48 des Rohrelements 44 vom verjüngten Ende 45 her ausgebildet ist. Mit einem anderen Ende ist die Feder 51 von der Stirnfläche 52 des in den Ringspalt eingeführten Zylinders 53 mit der Längsbohrung 54 angedrückt, die die Schraubengewinde 55 auf der inneren Fläche hat, die auf die Schraubengewinde 35 des Stiftes 33 angeschraubt ist. An der Oberfläche des Zylinders 53 sind die Längsrillen 56 zur Verminderung des Abrutschens der Finger ausgebildet. Außerdem sind an dieser Oberfläche die ringförmigen Ritzen 57 zur Einstellung des von der Vorrichtung beim Festschrauben erreichten Drehmoments aufgebracht, bei dem das Gehäuse dem Kopfteil gegenüber "knickt" (sieh nachstehend die Beschreibung des Betriebs).

Wie schon früher angemerkt, sind an der Stirnfläche des verjüngten Ende 45 des Rohrelements 44 zwei gegenüber liegenden Aushöhlungen 46 ausgebildet. Es ist wichtig zu bemerken, dass diese Aushöhlungen auf solche Weise ausgebildet sind, dass im zusammengesetzten Zustand jede von ihnen gegenüber der entsprechenden Rippe 29 oder 30 liegt, die von außen die geneigte Stirnfläche zwischen den Nocken des Kopfteiles im zusammengesetzten Zustand begrenzen.

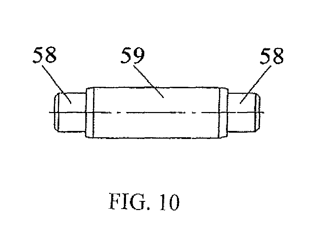

Man muss anmerken, dass die zwei gegenüber gerichteten Nocken 15 des Endteils 14 des Gehäuses 2 die Enden 58 des Stiftes 59 vorstellen, der steif innerhalb der Durchgangsbohrung 60 befestigt ist (Fig. 10).

So ist die Konstruktion der angemeldeten Vorrichtung in der Statik.

### Montage der angemeldeten Vorrichtung

Man setzt in die Längsbohrung 6 des Kopfteils 3 von der Stirnfläche 5 her einen Stößel 7 mit dem Greifstift 8 ein, der zur Querbohrung 4 gerichtet ist. Man führt den Stift 22 in die zusätzliche Querbohrung 21 ein. Danach nimmt man den Stift 33 und führt seine Stirnfläche 40 in die Aushöhlung 42 des Stößels 7 so ein, dass der an der Stirnfläche 40 angeordnete sechskantige Vorsprung 39 in die zusätzliche sechsflächige in der Aushöhlung ausgebildete Rille 41 hineinpasst. Man dreht den Stift 33 im Uhrzeigersinn oder entgegen dem Uhrzeigersinn bis der Stößel 7 in der Richtung der Querbohrung 4 "durchfällt" und sein Greifstift 8 in diese Querbohrung 4 herausgeht. Das geschieht in dem Augenblick, wenn der flache seitliche Längsschnitt 19 des Vorsatzes 17 mit der zylindrischen Oberfläche des Stiftes 22 zusammenfällt. Man nimmt den Stift 33 aus der Aushöhlung 42 des Stößels 7 heraus und setzt sofort die Feder 9 drin ein. Die Aushöhlung 42 ist dazu bestimmt, um den Stößel 7 innerhalb der Längsbohrung 6 zu drehen (einzurichten) (innerhalb der Längsbohrung befindet sich eine zusätzliche sechsflächige Rille für den sechskantigen Nocken an der Stirnfläche 40 des Stiftes 33), sowie um die Feder 9 der Längsbohrung 6 entlang zu richten.

Danach muss man den Stift 33 nehmen. Der eine Endabschnitt des Stiftes 33 stellt das Endteil 14 des Gehäuses 2 vor und weist die Kugelform mit zwei entgegen gerichteten Vorsprüngen 15 auf. An seinem Gegenende hat der Stift 33 den Abschnitt 34 mit der Schraubengewinde 35. Den Endteil 14 des Gehäuses 2, der eine Kugelform hat, führt man von der Stirnfläche 5 her in die Längsbohrung 6 des Kopfteils ein. Gleichzeitig rührt man seine entgegen gesetzte Nocken 15 in die Längsrillen 11 ein. Die Einführung setzt man bis zum Anschlag der Nocken 15 gegen die Wand der Querrille 12 fort. Das geschieht am Ende 13 jeder Längsrille 11. Bei der Verschiebung drückt der kugelförmige Endteil 14 des Gehäuses 2 die Feder 9 zusammen. Nach dem Anschlag dreht man den Stift 33 um 90° im Uhrzeigersinn oder entgegen dem Uhrzeigersinn und lässt los. Zwei entgegengesetzt gerichteten Nocken 15 werden unter der Einwirkung der Feder 9 in die zusätzliche Rillen 16 eingedrückt. Nachher setzt man auf den Stift 33 das Rohrelement 44 bis zum Anschlag des verjüngten Ende gegen die geneigte Stirnflächen 27 und 28 zwischen den Vorsprüngen 23, 24, 25, 26 an. Man setzt die Feder 51 in den Ringspalt zwischen dem Stift 33 und dem Rohrelement 44 bis zum Anschlag gegen den Nocken 49 ein. Danach, das Gegenende der Feder 51 zusammendrückend, setzt man das Ende des Zylinders 53 ins Rohrelement ein und schrauben seine Schaubengewinde 35 auf die Schraubengewinde 35 des Stiftes 33 auf. Dabei wird die Feder zusammengedrückt. Man setzt die Drehung fort, bis bei der Stirnfläche des Rohrelements 44 die erforderliche Ritze 57 für die Einstellung des von der Vorrichtung beim Festschrauben erreichten Drehmoments steht, bei dem ein "Knick" des Gehäuses gegenüber den Kopfteil stattfindet. Wie aus Fig. 1 ersichtlich, hat Zylinder 53 drei Ritzen 57. Bei der Verdrehung bis zur rechten äußeren Ritze beträgt das maximale Drehmoment, bei dem der "Knick" des Gehäuses gegenüber den Kopfteil stattfindet, 10 H·cm, bei weiterer Verdrehung und Erreichung der nächsten Ritze findet der "Knick" bei 20 H·cm statt, bei Fortsetzung der Verdrehung und Erreichung der linken äußeren Ritze - bei 30 H·cm. In Abhängigkeit von der Federkraft können auch die anderen maximalen Drehmomente bei der Erreichung von jeweiliger Ritze erreicht werden. Für ihre Festlegung dreht man den Kopf, die Feder zusammendrückend, bis zur Ritze, die das erforderliche Drehmoment zeigt. In diesem Fall passt die Ritze an die Stirnfläche des Handgriffs an.

Also, wenn die Stirnfläche 61 des Rohrelements 44 über einer der Ritzen 57 des Zylinders 53 steht, zeigt die Ritze eine konkrete Bedeutung des Drehmomentwertes, bei dem die Auslösung der Vorrichtung stattfindet, d.h. das "Knicken" des Kopfteiles gegenüber dem Gehäuse.

Auf solche Weise wird durch die Verdrehung des Zylinders 53 eine stufenlose Einstellung der Vorrichtung auf den Wert des Drehmoments, bei dem die oben genannte Auslösung der Vorrichtung beim Festschrauben stattfindet.

Die Vorrichtung ist betriebsbereit.

### Betrieb

Für das Festschrauben wirft man den Kopfteil 3 der Vorrichtung zum Festschrauben 1 auf den Teil über, den man drehen und festziehen oder mit deren Hilfe verschiedene Suprakonstruktionen einsetzen oder Implantate inserieren muss. Der Greifstift 8 des Stößels 7 ist mit der Kupplungsmöglichkeit ausgebildet, wenigstens mit dem Teil, der in die Querbohrung 4 eingesetzt ist. Man fängt an, die hin- und hergehende Winkelbewegungen mit der Vorrichtung auszuüben. Das bedeutet, dass zuerst man die Vorrichtung zum Beispiel im Uhrzeigersinn um einen bestimmten Winkel dreht, dabei greift der Greifstift 8 des Stößels 7 den oben erwähnten Teil, den man drehen oder festziehen oder mit deren Hilfe verschiedene Suprakonstruktionen einsetzen oder Implantate inserieren muss. Danach dreht man die Vorrichtung in die Gegenrichtung, d.h. entgegen dem Uhrzeigersinn, um denselben Winkel, dabei schlupft der Greifstift 8 des Stößels 7. Dann dreht man die Vorrichtung im Uhrzeigersinn wieder u.s.w., schrittweise einziehend. Dabei geschieht bei jedem nachfolgenden Einzug im Uhrzeigersinn die allmähliche Steigerung des Einzugswiderstandes, für deren Überwindung das höhere Drehmoment anzuwenden ist. Bei der Erreichung des bestimmten Wertes des Drehmoments "spricht" die Vorrichtung "an" bzw. "knickt" der Kopfteil 3 gegenüber dem Gehäuse 2. Das zeugt davon, dass der beim Drehen des Zylinders 53 eingestellte Drehmomentwert erreicht ist.

Gehen wir darauf näher ein.

Beim Festschrauben wirkt das verjüngte Ende 45 des Rohrelements mit den geneigten Stirnflächen 27 und 28 zwischen den Nocken des Kopfteiles zusammen. Dabei strebt die beim Festschrauben erreichte Kraft an, die Feder 51 zusammenzudrücken. Wenn das Drehmoment größer ist, als es von der Ritze eingestellt wurde, fängt die Feder 51 an, sich zusammenzupressen. Infolgedessen beginnt die Drehung des Gehäuses 2 dem Kopfteil 3 gegenüber. Das Vorhandensein eines abgerundeten Abschnitts 63 zwischen jeder Aushöhlung 46 und der Seitenfläche 62 des verjüngten Endes 45 des Rohrelements 44 trägt dazu auch bei.

Wie schon früher angemerkt, sind an der Strinfläche des verjüngten Endes 45 des Rohrelements 44 zwei gegenüberliegenden Aushöhlungen ausgebildet. Diese Aushöhlungen sind so ausgebildet, dass bei der Drehung in die äußere Stellung jede von ihnen gegenüber der entsprechenden Rippe 29 oder 30 liegt, die im zusammengesetzten Zustand die geneigte Stirnfläche zwischen den Nocken des Kopfteiles begrenzen. Die Aushöhlung wirkt mit der entsprechenden Rippe zusammen, sie stoßt an die Seitenfläche 64 des Kopfteiles. Das bricht die weitere Drehung des Kopfteiles dem Gehäuse gegenüber ab. Die Aushöhlung kann Zylinder- oder Ellipsenform oder eine andere geschwungene Linienführung haben. In dieser Stellung kann man das Drehmoment erreichen, das den mittels der Ritzen 57 am Zylinder 53 eingestellten Wert übersteigt.

Aber man kann die Vorrichtung von Anfang an so einstellen, dass mit seiner Hilfe das höhere Drehmoment erreicht werden kann, als der maximale an den Ritzen angegebene Wert. Dazu muss man bei der Montage das Rohrelement mit seinem verjüngten Ende 45 nicht auf den geneigten Stirnflächen 27 und 28, sondern auf den flachen querliegenden Stirnflächen 31 und 32 anordnen. Als Ergebnis werden der Kopfteil 3 und das Gehäuse 3 zu einer untrennbaren Einheit, und man kann das wesentlich höheres Drehmoment erreichen, als das berechnete Anzugsmoment, dabei werden das "Knicken" des Kopfteiles 3 gegenüber dem Gehäuse 2 zwei hohen Winkelnocken verhindern.

### Demontage

Zur Demontage der Vorrichtung zum Festschrauben muss man den Zylinder 53 aus dem Rohrelement 44 herausschrauben, die Feder 51 herausnehmen und das Rohrelement 44 vom Stift 33 ausmontieren. Danach muss man den Stift 33 zur Seite der Querbohrung 4 des Kopfteils 3 bis zum Anschlag aufdrücken, die Feder 9 innerhalb des Kopfteiles zusammenpressend. Dabei rasten die Nocken 15 am Endteil 14 des Gehäuses 2 aus den zusätzlichen Rillen 16 raus. Danach muss man die Nocken 15 um 90° im Uhrzeigersinn oder gegenüber dem Uhrzeigersinn drehen. Infolgedessen geraten die Nocken 15 aus der Querrille 12 in die Längsrillen 11. Dann muss man das Ende des Gehäuses 2 aus der Längsbohrung 6 des Kopfteiles 3 herausziehen. Man stellt den Kopfteil 3 senkrecht mit der Längsbohrung nach unten und/oder man schüttelt ihn so, dass die Feder 7 und der Stößel 7 herausfallen.

Die Vorrichtung ist jetzt demontiert und man kann jeden Bauteil durchwaschen und desinfizieren.

### Gewerbliche Nutzbarkeit

Die Erfindung ist für die Anwendung in den medizinischen Einrichtungen bestimmt.

Die Erfindung ermöglicht es, den Arbeitsaufwand bei der Demontage und Montage zu senken mit gleichzeitiger Erhaltung aller anderen Vorteile insbesondere der Möglichkeit, den maximalen Wert des beim Festschrauben angelegten Drehmoments zu regulieren. Es ist bemerkenswert, dass Demontage und Montage der Vorrichtung unmittelbar von den medizinischen Kräften der Behandlungseinrichtung durchgefühii werden können.

Außer der angeführten Varianten der Erfindung sind auch ihre weiteren zahlreichen Modifikationen möglich.

Sie alle werden von den nachstehend angeführten Erfindungsansprüchen umgreift.

## Patentansprüche

1. Vorrichtung zum Festschrauben, die das Gehäuse und den Kopfteil mit der Querbohrung miteinschließt, wobei innerhalb des Kopfteiles von der Querbohrung bis zur Stirnfläche verlaufende Längsbohrung ausgebildet ist, in der ein Stößel mit dem Greifstift an seiner Stirnfläche und eine Feder angeordnet sind, **dadurch gekennzeichnet, dass** in der Wand der Längsbohrung des Kopfteils von der Stirnfläche her zwei entgegen gerichteten Längsrillen mit der Querrille an den Enden ausgebildet sind, der Endteil des Gehäuses mit zwei entgegen gerichteten Nocken ausgeführt und im zusammengesetzten Zustand in der Längsbohrung des Kopfteils angeordnet ist, und die Enden seiner Nocken- in der Querrille mittels der Längsrillen, wobei die Feder zwischen dem Stößel und dem Endteil des Gehäuses installiert ist.

2. Vorrichtung nach Anspruch 1, **dadurch gekennzeichnet, dass** das Endteil des Gehäuses in der Kugelform ausgebildet ist.

3. Vorrichtung nach Anspruch 1, **dadurch gekennzeichnet, dass** die Querrillen des Kopfteil mit zusätzlichen entgegen liegenden Rillen ausgebildet sind, die zur Stirnfläche gerichtet sind, an der die Längsbohrung münden.

4. Vorrichtung nach Anspruch 1, **dadurch gekennzeichnet, dass** die Längsbohrung und der Stößel die Zylinderform aufweisen, dabei hat die Wand der Längsbohrung zwischen der Querbohrung und dem Querrille einen Vorsprung, und auf der Stirnfläche des Stößels gibt es einen zylinderförmigen Nocken mit dem flachen seitlichen Längsabstich, und der Greifstift ist auf der Stirnfläche des zylinderförmigen Nockens ausgebildet, und außerdem ist im Kopfteil eine zusätzliche Querbohrung ausgebildet, die zwischen der Querbohrung und der Querrille, in der ein Stift angeordnet ist, verlaufende Längsbohrung teilweise durchquert, wobei im zusammengesetzten Zustand der flache seitliche Längsabstich des zylinderförmigen Nockens die Oberfläche des Stiftes berührt.

5. Vorrichtung nach Anspruch 4, **dadurch gekennzeichnet, dass** der Nocken die Ringform aufweist.

6. Vorrichtung nach Anspruch 1, **dadurch gekennzeichnet, dass** die Stirnfläche, in der die Längsbohrung mündet, die Ecknocken hat, wobei zwei diagonal entgegen liegenden Nocken die kleinere Höhe haben, als die anderen zwei, und die Stirnflächen zwischen den Nocken, in denen die entgegen liegenden Längsrillen münden, eine Neigung von Außenrippen des Kopfteils nach innen haben.

7. Vorrichtung nach Anspruch 6, **dadurch gekennzeichnet, dass** das Gehäuse einen Endteil mit zwei entgegen gerichteten Nocken und einen Hauptteil aufweist, der den mit dem Endteil des Gehäuses verbundenen Stift hat, der an seinem Gegenende den Abschnitt mit der Schraubengewinde aufweist, sowie ein den Stift umgreifendes Rohrelement, dessen ein Ende verjüngt ist und sich auf geneigte Stirnflächen zwischen den Nocken des Kopfteiles stützt, wobei im Ringspalt zwischen dem Rohrelement und dem Stift die Feder angeordnet ist, die mit einem ihren Ende auf den Vorsprung an der Wand des Rohrelementhohlraums von seinem verjüngten Ende her abgestützt ist, und mit ihrem anderen Ende in den Ringspalt des Zylinders mit der Längsbohrung angedrückt ist, die die Schraubengewinde an der Innenfläche aufweist, die auf die Schraubengewinde des Stiftes aufgeschraubt ist.

8. Vorrichtung nach Anspruch 7, **dadurch gekennzeichnet, dass** an der Stirnfläche des verjüngten Endes des Rohrelement zwei entgegengesetzt liegende Aushöhlungen ausgebildet sind, die im zusammengesetzten Zustand gegenüber der entsprechenden Rippe liegen, die die geneigte Stirnfläche zwischen den Nocken des Kopfteiles im zusammengesetzten Zustand begrenzen.

9. Vorrichtung nach Anspruch 7, **dadurch gekennzeichnet, dass** der Stift einen sechskantigen Nocken an seiner Stirnfläche aufweist, und an der Stirnfläche des Stößels, die der Stirnfläche mit dem Greifstift gegenüberliegt, eine Aussparung mit der zusätzlichen sechsseitigen Rille ausgebildet ist.

10. Vorrichtung nach Anspruch 1, **dadurch gekennzeichnet, dass** zwei Vorsprünge des Endteils des Gehäuses die Enden des innerhalb der Durchgangsbohrung befestigten Stiftes sind.
